# EUROPÄISCHE PATENTSCHRIFT

(11) **EP 0 524 485 B1**
(45) Veröffentlichungstag und Bekanntmachung des Hinweises auf die Patenterteilung: **15.02.1995**
(21) Anmeldenummer: 92111541.6
(22) Anmeldetag: 08.07.1992
(51) Int. Cl.: G01D 5/24, G01B 7/30

(54) **Kapazitiver Drehwinkelgeber**
Capacitive angular transducer
Capteur d'angle de rotation capacitif

(30) Priorität: 20.07.1991 DE 4124160
(43) Veröffentlichungstag der Anmeldung: 27.01.1993
(73) Patentinhaber: Valeo Borg Instruments Verwaltung GmbH, 75196 Remchingen (DE)
(72) Erfinder: Hornfeck, Rüdiger, Dipl.-Ing. (FH), W-8571 Betzenstein (DE); Bär, Klaus, Dipl.-Ing., W-8560 Lauf (DE); Barth, Manfred, W-7547 Wildbad/Calmbach (DE)
(74) Vertreter: COHAUSZ HASE DAWIDOWICZ & PARTNER

(56) Entgegenhaltungen:
- EP-A- 0 004 764
- EP-A- 0 171 562
- DE-A- 2 937 248
- DE-A- 3 744 256
- DE-A- 3 923 042
- FR-A- 2 144 589

## Beschreibung

Die Erfindung betrifft einen Drehwinkelgeber gemäß dem Oberbegriff des Anspruches 1.

Ein derartiges Gerät ist aus der EP-A-0 004 746 als Rotations-Pulsgenerator bekannt. Als Abstandshalter zwischen den beiden Trägerscheiben dient ein Ring mit dem Verhältnis zum Radius der Trägerscheiben so kleinem Radius, daß die Elektrodenmuster (dort speichenförmige Elektroden gegenüber einer Ringelektrode) außerhalb dieses Abstandsringes liegen. Dadurch können insbesondere auch bei höherer Umdrehungszahl auftretende Flattererscheinungen im Bereiche der Außenränder der Trägerscheiben nicht beherrscht werden, während solche die kapazitive Kopplung zwischen den Trägerscheiben-Elektroden stark beeinflussenden Schwingungen nach jenem Stande der Technik noch dadurch verstärkt werden, daß der Abstandsring und die rotierende Scheibe gegenüber der gerätefesten Trägerscheibe und damit auch gegenüber der Trägerwellen-Achse verkippbar auf der Trägerwelle gehaltert sind. Für einen mechanisch hoch beanspruchbaren Drehwinkelgeber in Form eines Winkelstellungssensors ist eine derartige Abstandskonstruktion deshalb nicht geeignet.

Für Anwendungen als Drosselklappenstellungs-Sensor auch nicht geeignet ist die mikromechanisch realisierte V-förmige Linearführung eines kapazitiven Wegsensors nach DE-A-3 923 042.
Die Erfindung zielt eher auf einen Drehwinkelsensor, wie er aus der DE-A-2 937 248 bekannt ist. Dort ist die Drehwelle einer beweglichen Elektroden-Trägerscheibe im Boden eines topfförmigen Gehäuses gelagert. Gegenüberliegend tritt die Drehwelle durch eine gehäusefeste und als Deckel dienende feste Elektroden-Trägerscheibe frei hindurch. Diese Welle wird von dem Bauteil verdreht, dessen Momentanstellung über eine kapazitive Auswertung des Überdeckungsgrades sektorförmiger Elektroden gemessen werden soll, in dem z. B. unmittelbar die resultierende Kapazität, oder aber die Größe eines diesen Blindwiderstand passierenden Wechselstromes, gemessen wird. Da allerdings die in jedem Falle in die Messung eingehende Kapazität auch vom Elektrodenabstand abhängt und dieser bei schnellen Drehbewegungen oder bei Biegebeanspruchungen der Welle weder zeitlich noch über den Trägerscheiben-Umfang konstant ist, ist zur Verringerung des abstandsabhängigen Fehlereinflusses ein möglichst großer Elektrodenabstand zu wählen. Das bedingt Ungenauigkeiten aufgrund geringer Kapazitäten, die nur durch in Bewegungsrichtung breite Elektroden, also durch große Überdeckungsflächen kompensiert werden können. Daraus schließlich resultiert, daß ein solcher kapazitiver Winkelsensor bei nur beschränkter Genauigkeit keine große Winkelauflösung erzielen läßt. Die ist andererseits erforderlich, wenn z.B. für die elektronisch unterstützte Steuerung der Funktion eines Verbrennungsmotors nicht nur die Drosselklappenstellung hinsichtlich bestimmter, konstruktiv vorliegender Endstellungen (vgl. DE-PS 36 40 110) erfaßt werden soll, sondern unmittelbar die Drosselklappenbewegung in feiner Winkelauflösung auszuwerten ist.

In Erkenntnis dieser Gegebenheiten liegt der Erfindung die Aufgabe zugrunde, einen Drehwinkelgeber gattungsgemäßer Art derart auszulegen, daß er über einen breiten Temperaturbereich und auch nach extremen mechanischen Beanspruchungen eine digitale Winkelinformation in hoher Auflösung und guter Genauigkeitskonstanz bei fertigungsfreundlichem und doch kompaktem Aufbau erzielen läßt.

Diese Aufgabe ist erfindungsgemäß beim gattungsgemäßen Drehwinkelgeber dadurch gelöst, daß dieser gemäß dem Kennzeichnungsteil des Anspruches 1 ausgelegt ist.

Nach dieser Lösung ist zwischen den aus elektrisch isolierendem, mechanisch hoch beanspruchbarem Material wie Glas oder Keramik bestehenden Trägerscheiben für eine feine speichenförmige Elektrodenstruktur und für die Aufnahme der Auswerteelektronik im Zentrum der gehäusefest eingebauten Trägerscheibe eine distanzgebende Abstützung vorgesehen, die als axial beanspruchtes Gleit- oder Wälzlager im Randbereich der Trägerscheiben angeordnet ist; bei separater Ausbildung eines radialen Gleit- oder Wälzlagers in der Nähe der Rotorachse, wenn nicht hinter dem Trägerscheiben-Randbereich ein kombiniertes Wälzkörper-Lager für Aufnahme sowohl axialer wie auch radialer Kräfte vorgesehen ist, das auf Einschalten eines minimal zulässigen axialen Spieles ausgelegt ist.

Diese Lösungen erbringen über ein breites Betriebstemperaturspektrum für die gesamte Lebensdauer eine gleichbleibende Genauigkeit. Zusätzliche Weiterbildungen und Vorteile sowie weitere Merkmale der Erfindung ergeben sich aus den weiteren Ansprüchen und aus nachstehender Beschreibung von in der Zeichnung unter Beschränkung auf das Wesentliche aber angenähert maßstabsgerecht vergrößert skizzierten bevorzugten Realisierungsbeispielen zur erfindungsgemäßen Lösung. Es zeigt jeweils im abgebrochenen Axial-Längsschnitt:
- Fig. 1: den Winkelgeber mit über einen Distanzring axial gegeneinander gedrückten Trägerscheiben und fliegendem Radialgleitlager für den Wellenstumpf des Rotors,
- Fig. 2: getrennte Wälzlager für die axiale Positionierung der Trägerscheiben voreinander und für die radiale Halterung eines Rotor-Wellenstumpfes,
- Fig. 3: ein Radial-Kugellager für den Rotor, das zugleich auch dessen axiale Positionierung übernimmt und
- Fig. 4: ein Schrägkugellager hinter dem Außenrandbereich der Trägerscheiben.

Die dargestellten kapazitiven Drehwinkelgeber 11 weisen im wesentlichen jeweils ein topfförmiges Gehäuse 12 aus formstabilem, mechanisch und thermisch hoch beanspruchbarem Material geringen thermischen Ausdehnungskoeffizientens wie etwa Messing oder einem entsprechenden Kunststoff auf. Das ist zum Schutz gegen Staub und Spritzwasser mittels eines aufgeklebten oder aufgeschweißten Deckels 13 hermetisch verschließbar. Im Gehäuse-Boden 14 dient eine Durchgangsöffnung 15 der fliegenden Lagerung einer Eingangswelle 16, die von der Deckelöffnung her einsteckbar ist, bis sie sich mit ihrem umlaufenden Flansch 17 gegen den Boden 14 abstützt. Gegenüber ist am Flansch 17 eine kugelkappenähnlich ausgewölbte Federscheibe 18 drehfest angeordnet.

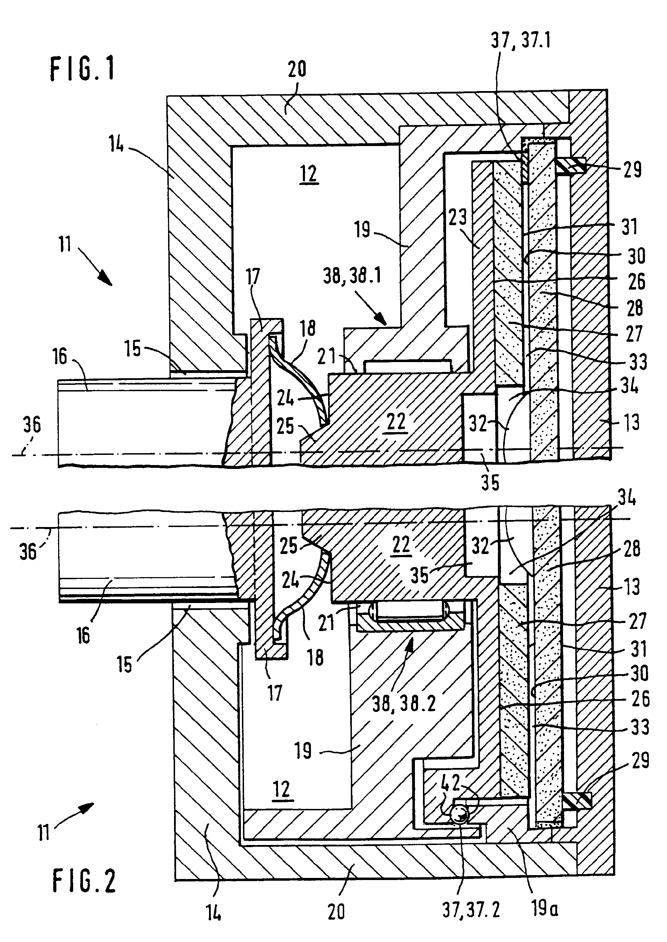

Ebenfalls von der Deckelöffnung her ist ein Lagerhalter 19 in das Gehäuse 12 bis zur axialen Anlage gegen einen Vorsprung in der Gehäusewand 20 oder gegen den Boden 14 eingesetzt und drehstarr im Gehäuse 12 festgelegt. Im Beispielsfalle der Fig. 2 ist der Lagerhalter 19 zweiteilig ausgeführt, indem vor ihm noch ein Stützring 19a gehäusefest eingebaut ist.

In die zur Durchgriffsöffnung 15 koaxiale Lageröffnung 21 greift der fliegend gelagerte Wellenstumpf 22 eines Rotors 23 ein. Die Wellenstirn 24 gerät in Anlage mit dem Kappenbereich der Federscheibe 18, deren Zentralöffnung von einem Profilnoppen 25 der Wellenstirn 24 formschlüssig durchgriffen wird, so daß eine axial abgefederte Drehmomentenübertragung von der Eingangswelle 16 über die Federscheibe 18 auf den Rotor 23 möglich ist. Der ist auf seiner vorderen Stirnfläche 26 kraft- oder formschlüssig mit einer beweglichen Trägerscheibe 27 bestückt, beispielsweise verklebt oder verschweißt. Parallel davor ist eine feste Trägerscheibe 28 im Randbereich unmittelbar oder über den gerätefesten Lagerhalter 19 mit dem Gehäuse 12 verklebt oder verschweißt. Nach der in dieser beschriebenen Reihenfolge vollzogenen, fertigungsgünstig von der Deckelöffnung her erfolgten Montage des Drehwinkelgebers 11 wird der Gehäuse-Topf durch den Deckel 13, unter Zwischenlage steif-elastischer Abstandshalter 29 zur Vorderseite der festen Trägerscheibe 28, verschlossen.

Die feste Trägerscheibe 28 trägt auf ihrer Rückfläche 30, und dieser zugewandt die verdrehbare Trägerscheibe 27 auf ihrer Vorderfläche 31, ein schmal-sektorförmiges oder speichenförmiges Muster 10 von Elektroden und Leiterbahnen-Strukturen, die durch Sputter-, Galvanik- oder Ätzprozesse aufgebracht sind, wie aus der Herstellungstechnologie der Flüssigkristall-Anzeigezellen bekannt. Je nach der Drehstellung der beweglichen Trägerscheibe 27 in bezug auf das Elektrodenmuster auf der festen Trägerscheibe 28 ergeben sich überlappungsabhängig unterschiedliche Kapazitätswerte, die z.B. mittels Strommessung in einer integrierten Schaltung 32 erfaßt werden, welche im Zentrum der Rückfläche 30 der gerätefesten Trägerscheibe 28 angeordnet ist. Über den axial schmalen lichten Plattenabstand 33 hinaus ragt der eingekapselte Schaltkreis in den Dickenbereich der beweglichen Trägerscheibe 27 vor, die hier deshalb eine zentrale Aussparung 34 aufweist, hinter der sich gegebenenfalls noch eine Einsenkung 35 im Rotor 23 und seinem Wellenstumpf 22 anschließt. Bezüglich einer bevorzugten Elektroden-Geometrie und einer vorteilhaften Schaltung zur Auswertung der stellungsabhängigen Kapazitätswerte dieses Drehwinkelgebers 11 wird auf die älteren Anmeldungen gemäß DE-A- 40 34 991 "Meßeinrichtung zum elektrischen Erfassen eines Stellwinkels" und DE-A- 41 00 556 "Abfrageschaltung für einen kapazitiven Positionsgeber" Bezug genommen.

Eine große Winkelauflösung des Gebers 11 bedingt sehr schmale speichenförmige Elektroden, so daß selbst die größtmögliche Überdeckung eines Elektrodenpaares der beiden Scheiben 27, 28 nur eine relativ kleine gemeinsame Projektionsfläche erbringt. Andererseits ist für eine möglichst störfreie Stromabfrage des momentanen Kapazitätswertes, also der momentanen Überdeckungswinkelstellung, eine möglichst große Kapazität anzustreben. Deshalb muß der lichte Abstand 33 zwischen den Scheiben 27, 28 möglichst gering gehalten werden, denn die Kapazität eines Plattenkondensators ist bekanntlich der Überdeckungsfläche direkt und dem Plattenabstand umgekehrt proportional, mit dem dazwischen angeordneten Dielektrikum als Proportionalitätsfaktor. Damit aber ist die Konstanz dieses Abstandes 33 sehr kritisch. Die Abstandskonstanz ist insbesondere dann nicht ohne weiteres gewährleistet, wenn die bewegliche Trägerscheibe 27 rasch dreht bzw. stark beschleunigt oder abgebremst wird, weil dann der Drehbewegung sich unweigerlich Taumelbewegungen überlagern, die prozentual einen großen Anteil am wirksamen Soll-Abstand 33 ausmachen können. Das darf jedoch nicht zugelassen werden, weil Fehlereinflüsse in solcher Größenordnung das Winkelmeßergebnis unbrauchbar machen würden. Hinzu kommt, daß aufgrund thermischer Einflüsse die eine Trägerscheibe 27 sich radial und insbesondere axial gegenüber der anderen Trägerscheibe 28 verlagern kann, was zusätzliche Fehlereinflüsse auf den überdeckungsabhängigen Kapazitätswert erbringt.

Um diese Fehlereinflüsse vor allem in Hinblick auf das Abstands-Spiel parallel zur Drehachse 36 zu beherrschen, ist direkt oder indirekt zwischen den Trägerscheiben 27-28 ein Abstandshalter 37 angeordnet. Der verläuft radial möglichst weit von der Drehachse 36 entfernt, um einen möglichst großen Einfluß zur Unterdrückung von Taumelbewegungen des freien Randes insbesondere der beweglichen Trägerscheibe 27 zu erzielen. Dieser Abstandshalter 37 kann als axiales Gleitlager 37.1 in Form eines Distanzringes aus hartem Material wie Stahl oder Kupferberyllium ausgelegt sein, wie in Fig. 1 berücksichtigt. Falls zur Vermeidung von Abrieberscheinungen Gleitmittel guter Wärmeleitfähigkeit eingesetzt werden, füllen diese zweckmäßigerweise auch den Hohlraum des Plattenabstandes 33 und wirken somit als elektrisch isolierendes und kapazitätserhöhendes Dielektrikum. Es kann das axiale Gleitlager 37.1 aber auch als axial dünne und radial breite Folien-Ringscheibe dimensioniert sein, deren abriebfestes Material dann zugleich als Dielektrikum zwischen den Mustern 10 der Kondensator-Elektroden dient. Als Radiallager 38 für die verdrehbare Trägerscheibe 27 bzw. den Wellenstumpf 22 ihres Rotors 23 ist nach Fig. 1 ein Gleitlager 38.1 und gemäß Fig. 2 ein Wälzlager 38.2 in (bezüglich des Halbmessers der Trägerscheibe 27) möglichst kleinem Abstand von der Drehachse 36 vorgesehen. In beiden Fällen erfolgt die axiale Positionierung gegen den Abstandshalter 37 durch den Andruck des Rotors 23 mittels der gehäusefest abgestützten Federscheibe 18. Der axiale Abstandshalter 37 ist nach Fig. 2 durch eine Anzahl von Wälzkörpern 37.2 realisiert, die im Bereiche des Außenrandes der Trägerscheiben 27, 28 hinter diesen zwischen dem Rotor 23 und einem Lagerhalter-Stützring 19a radial nichttragend angeordnet sind. Die Wälzkörper 37.2 können also durchaus einen größeren Durchmesser als der von ihnen sicherzustellende Abstand 33 aufweisen, wenn sie nicht direkt zwischen den Scheiben 27-28 liegen, sondern der Abstand 33 sich durch die gegenseitige Anordnung der Stützflächen ergibt. In diese können Laufrillen 42 zur verschleißfreien Führung der Wälzkörper 37.2 eingearbeitet sein, wie als solche aus der Kugellagertechnik bekannt.

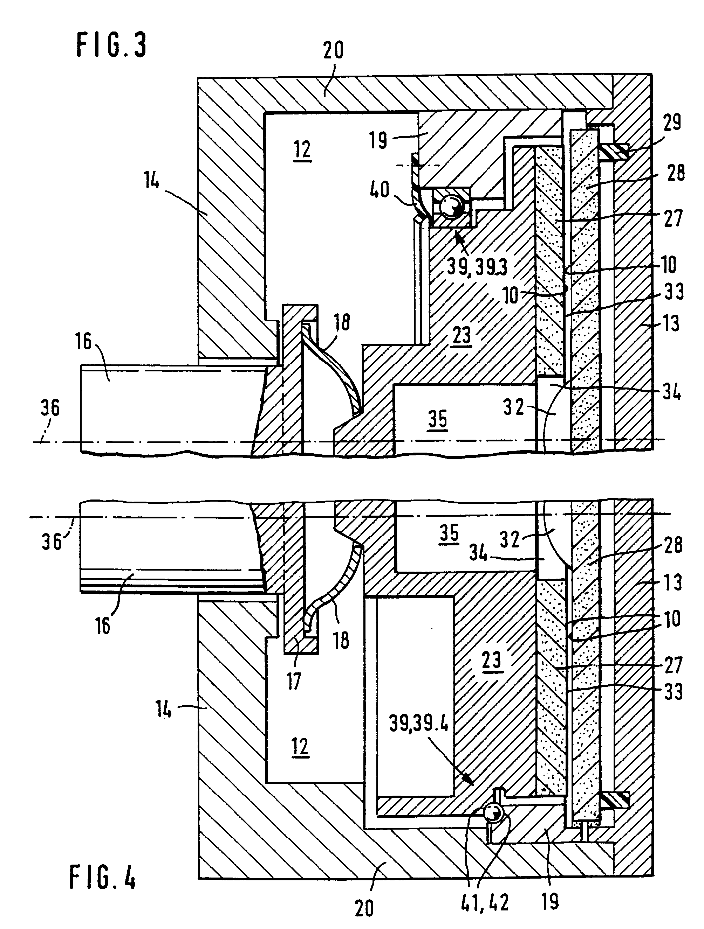

Bei den abgewandelten Ausführungsbeispielen nach Fig. 3 und nach Fig. 4 sind der bezüglich der Trägerscheiben 27, 28 außenliegende axial lagernde Abstandshalter 37 und das innenliegende Radiallager 38 zu einem mehr oder weniger weit von der Drehachse 36 radial fort, außenliegenden kombinierten Radial-Axial-Lager 39 zusammengefaßt, bei sonst im wesentlichen gleichem Aufbau des Drehwinkelgebers 11 wie in bezug auf Fig. 1 und Fig. 2 beschrieben. Nach Fig. 3 ist dieses kombinierte Lager 39 als käfiggeführtes Rillen- oder Schräg-Kugellager 39.3 mit hinreichender axialer Beanspruchungskomponente ausgeführt, gegebenenfalls öffnungsseitig abgedeckt durch einen Schutzring 40. Das kombinierte Lager 39 gemäß Fig. 4 ist ein Schrägschulterlager 39.4 mit Wälzkörpern in Form von Kugeln oder Rollen, die in einem Käfig erfaßt sind oder im Interesse einer größeren Stückzahl käfiglos in entsprechende konkave Ringprofile 41 als den Laufrillen 42 eingelegt sind, welche an der Außenkante des Rotors 23 und an der Innenkante des gegenüberstehenden Lagerhalters 19 eingearbeitet sind. Solche kombinierten Radial-Axial-Lager 39 müssen zwar besonders präzise dimensioniert sein, weil beispielsweise thermisch bedingte Radialausdehnungen des Rotors 23 über die Schrägschulter-Abstützung auch Axialspiel und damit die an sich auszuschließenden Abstandsschwankungen zwischen den Trägerscheiben 27-28 zur Folge haben können; bei entsprechender Neigung und Querschnittsgeometrie der Ringprofile 41 läßt sich diese Verkopplung der Wirkung radialen und axialen Spiels aber beherrschen und weist dann den Vorteil auf, daß ein sehr präziser Plattenabstand 33 mit wesentlich geringerem Einbauvolumen sicherstellbar ist, als bei radial gegeneinander versetzten getrennten axialem Abstandshalter 37 einerseits und andererseits radialem Gleit- oder Wälzlager 38.

## Patentansprüche

1. Kapazitiver Drehwinkelgeber (11), insbesondere Drosselklappenstellungssensor, mit einer gerätefesten Trägerscheibe (28) in geringem lichtem Abstand (33) vor einer planparallel dazu verdrehbaren Trägerscheibe (27) für einander gegenüberliegende Elektrodenmuster (10), mit einer gerätefesten Lagerstelle für die verdrehbare Trägerscheibe (27) und mit parallel zur Drehachse (36) druckbeaufschlagtem Abstandshalter (37) zwischen den Trägerscheiben (27, 28),
die schmale sektorförmige Elektrodenmuster (10) aufweisen und durch im Bereiche ihrer Außenränder angeordnete Abstandshalter (37) gegeneinander geführt sind.

2. Drehwinkelgeber nach Anspruch 1,
dadurch gekennzeichnet,
daß zwischen den Trägerscheiben (27-28) eine Gleit-Distanzring (37.1) als Abstandshalter (37) angeordnet ist.

3. Drehwinkelgeber nach Anspruch 2,
dadurch gekennzeichnet,
daß der Raum zwischen den Trägerscheiben (27,28) innerhalb des Distanzringes (37.1) mit einem als Schmiermittel dienenden Dielektrikum gefüllt ist.

4. Drehwinkelgeber nach Anspruch 1,
dadurch gekennzeichnet,
daß zwischen den Trägerscheiben (27-28) eine Folie als Abstandshalter (37) angeordnet ist.

5. Drehwinkelgeber nach Anspruch 1,
dadurch gekennzeichnet,
daß im Scheiben-Randbereich unmittelbar oder mittelbar zwischen den Trägerscheiben (27-28) Wälzkörper (37.2) als Abstandshalter (37) angeordnet sind.

6. Drehwinkelgeber nach Anspruch 5,
dadurch gekennzeichnet,
daß die Wälzkörper (37.2) radial in Laufrillen (42) geführt sind.

7. Drehwinkelgeber nach einem der vorangehenden Ansprüchen,
dadurch gekennzeichnet,
daß gegenüber der Radialposition des Abstandshalters (37) zum Zentrum hin versetzt ein Gleit- oder Wälzkörper-Radiallager (38) für einen mit der verdrehbaren Trägersheibe (27) bestückten Rotor (23) vorgesehen ist.

8. Drehwinkelgeber nach einem der vorangehenden Ansprüche,
dadurch gekennzeichnet,
daß gegenüber der Drehachse (36) radial nach außen versetzt ein kombiniertes Radial-Axial-Wälzkörperlager (39) vorgesehen ist.

9. Drehwinkelgeber nach Anspruch 8,
dadurch gekennzeichnet,
daß das kombinierte lager (39) als Rillen-Schrägkugellager (39.3) mit minimalen Axialspiel dimensioniert ist.

10. Drehwinkelgeber nach Anspruch 1,
dadurch gekennzeichnet,
daß eine der beiden gegeneinander abgestützten Trägerscheiben in ihrer Oberflächengestaltung so als Abstandshalter (37) ausgebildet ist, daß sich der erforderliche Scheibenabstand (33) durch Aufbringen einer Zug- oder Druckkraft direkt einstellt.

## Claims

1. A capacitive angular transducer (11), especially a throttle valve position sensor, having a support plate (28) fixed to the appliance at a slight clearance (33) in front of a support plate (27), which can be rotated with parallel faces thereto, for mutually opposite electrode structures (10), having a bearing fixed to the appliance for the rotatable support plate (27) and having a spacer (37), pressurised parallel to the axis of rotation (36), between the support plates (27, 28), which comprise narrow sector-shaped electrode structures (10) and are mutually guided by spacers (37) provided in the region of their outer edges.

2. An angular transducer according to Claim 1,
**characterised in that** a sliding distance ring (37.1) is provided as a spacer (37) between the support plates (27 - 28).

3. An angular transducer according to Claim 2,
**characterised in that** the space between the support plates (27, 28) inside the distance ring (37.1) is filled with a dielectric used as a lubricant.

4. An angular transducer according to Claim 1,
**characterised in that** a foil is provided as a spacer (37) between the support plates (27 - 28).

5. An angular transducer according to Claim 1,
**characterised in that** roll bodies (37.2) are provided as spacers (37) in the plate edge region directly or indirectly between the support plates (27 - 28).

6. An angular transducer according to Claim 5,
**characterised in that** the roll bodies (37.2) are radially guided in grooves (42).

7. An angular transducer according to one of the preceding Claims,
**characterised in that** offset towards the centre in relation to the radial position of the spacer (37), a sliding or roller body radial bearing (38) is provided for a rotor (23) equipped with the rotatable support plate (27).

8. An angular transducer according to one of the preceding Claims,
**characterised in that** a combined radial-axial roller body bearing (39) is provided radially outwardly offset in relation to the axis of rotation (36).

9. An angular transducer according to Claim 8,
**characterised in that** the combined bearing (39) is dimensioned as a deep groove angular ball bearing (39.3) with minimal axial clearance.

10. An angular transducer according to Claim 1,
**characterised in that** the surface structure of one of the two support plates supported against one another is constructed as a spacer (37) so that the necessary plate spacing (33) is directly adjusted by applying a tensile or pressure force.

## Revendications

1. Capteur de déplacement angulaire capacitif (11), notamment capteur de position du papillon des gaz, comportant un disque support (28) fixé sur l'appareil et disposé à un faible écartement (33) devant un disque support (27) monté à rotation dans un plan parallèle, les deux disques étant destinés à supporter des motifs (10) d'électrodes se faisant face, un point d'appui fixé sur l'appareil pour le disque support rotatif (27) et un écarteur (37)soumis à une pression parallèlement à l'axe de rotation (26) et disposé entre les disques supports (27, 28) qui présentent des motifs (10) d'électrodes en forme de secteur et sont guidés l'un par rapport à l'autre au moyen d'écarteurs (37) disposés dans la région de leurs bords extérieurs.

2. Capteur de déplacement angulaire selon la revendication 1, caractérisé en ce qu'une bague d'écartement à glissement (37.1) est disposée en tant qu'écarteur (37) entre les disques supports (27, 28).

3. Capteur de déplacement angulaire selon la revendication 2, caractérisé en ce que l'espace entre les disques supports (27, 28) à l'intérieur de la bague d'écartement (37.1) est rempli avec un diélectrique servant de lubrifiant.

4. Capteur de déplacement angulaire selon la revendication 1, caractérisé en ce qu'une lamelle est disposée entre les disques supports (27, 28) en tant qu'écarteur (37).

5. Capteur de déplacement angulaire selon la revendication 1, caractérisé en ce que, dans la région du bord des disques, des paliers à roulement (37.2) sont disposés directement ou indirectement entre les disques supports (27, 28) en tant qu'écarteur (37).

6. Capteur de déplacement angulaire selon la revendication 5, caractérisé en ce que les paliers à roulement (37.2) sont guidés radialement dans des gorges de roulement (42).

7. Capteur de déplacement angulaire selon l'une des revendications précédentes, caractérisé en ce qu'il est prévu un palier radial à glissement ou à roulement (38) décalé vers le centre par rapport à la position radiale de l'écarteur (37) et destiné à un rotor (23) équipé du disque support rotatif (27).

8. Capteur de déplacement angulaire selon l'une des revendications précédentes, caractérisé en ce qu'il est prévu un palier combiné radial et axial (39) décalé radialement vers l'extérieur par rapport à l'axe de rotation (26).

9. Capteur dé déplacement angulaire selon la revendication 8, caractérisé en ce que le palier combiné (39) est dimensionné sous la forme d'un roulement à billes oblique à gorges (39.3) présentant un jeu radial minimal.

10. Capteur de déplacement angulaire selon la revendication 1, caractérisé en ce qu'un des disques supports disposés en appui l'un sur l'autre est conformé dans sa forme de surface en tant qu'écarteur (37) de telle manière que l'écartement (33) des disques nécessaire est réglé directement par l'application d'une force de traction ou de pression.
